# EUROPÄISCHE PATENTANMELDUNG

(11) **EP 1 418 452 A1**
(43) Veröffentlichungstag der Anmeldung: **12.05.2004**
(21) Anmeldenummer: 02405960.2
(22) Anmeldetag: 07.11.2002
(51) Int. Cl.: G02B 6/44

(54) **Hochspannungsbauteil mit optischer Faser und Verfahren zu seiner Herstellung**

(71) Anmelder: ABB RESEARCH LTD., 8050 Zürich (CH)
(72) Erfinder: Bohnert, Klaus, 5452 Oberrohrdorf (CH); Gabus, Philippe, 5400 Baden (CH); Brändle, Hubert, 8102 Oberengstringen (CH)
(74) Vertreter: ABB Patent Attorneys

(57) **Zusammenfassung**

Das Hochspannungsbauteil mit einem ersten Ende (1) und einem zweiten Ende (2), wobei im Betriebsfall das erste Ende (1 ) gegenüber dem zweiten Ende (2) auf einem Hochspannungspotential liegt, mit einem Isolierteil (3), welches zwischen dem ersten Ende (1) und dem zweiten Ende (2) angeordnet ist, und mit einer optischen Faser (4), welche in das Hochspannungsbauteil integriert ist und sich von dem ersten Ende (1) zu dem zweiten Ende (2) erstreckt, beinhaltet eine Kapillare (5) , welche sich von dem ersten Ende (1) zu dem zweiten Ende (2) erstreckt und innerhalb des Isolierteils (3) angeordnet ist. Der Innendurchmesser der Kapillare (5) ist grösser als der Aussendurchmesser der Faser (4), und die Faser (4) ist innerhalb der Kapillare (5) angeordnet. Die Kapillare (5) enthält ein Schutzmedium (6) zur Erzielung einer für den Betriebsfall geeigneten Durchschlagsfestigkeit in der Kapillare (5).

## Beschreibung

### Technisches Gebiet

Die Erfindung bezieht sich auf das Gebiet Hochspannungstechnik. Sie bezieht sich auf ein Hochspannungsbauteil gemäss dem Oberbegriff des Patentanspruches 1 und auf ein Verfahren zur Herstellung eines Hochspannungsbauteils gemäss dem Oberbegriff des Patentanspruches 11.

### Stand der Technik

In der Hochspannungstechnik gibt es eine Reihe von Anwendungen, bei denen man mit optischen Fasern einen grossen elektrischen Potentialunterschied überbrücken muss. Dies ist zum Beispiel bei Kommunikationssystemen in Hochspannungsanlagen oder auch bei faseroptischen Sensoren wie Strom-, Spannungs- und Temperatursensoren im Hochspannungsbereich der Fall. Ein Teil des Sensors, der Sensorkopf, befindet sich meist auf einem Hochspannungspotential. Eine Lichtquelle sowie ein elektronisches Detektionssystem des Sensors befinden sich meist auf Erdpotential. Die Verbindungsfasern zwischen diesen auf unterschiedlichen elektrischen Potentialen liegenden Teilen müssen derart verlegt werden, dass keine elektrischen Durchschläge auftreten können. Elektrische Durchschläge oder Entladungen könnten bei einer nicht fachgerechten Verlegung hervorgerufen werden, zum Beispiel durch eine Verschmutzung der Faser oder eines die Faser umgebenden und mechanisch schützenden Faserkabels. Insbesondere ist eine hohe Durchschlagsfestigkeit nur dann zu erreichen, wenn bei einem Verlegen der optischen Fasern keine grösseren Hohlräume innerhalb des Hochspannungsbauteils erzeugt werden, und wenn während einer geplanten Standzeit des Hochspannungsbauteils keine derartigen Hohlräume entstehen. Die Durchschlagsfestigkeit muss, je nach Betriebsspannung, für Wechselspannungen von permanent bis beispielsweise 500 kV und mehr sowie für kurzeitige Spannungsspitzen von beispielsweise bis zu etwa 2 MV gewährleistet sein.

In US 5'594'827 ist die Verlegung von optischen Fasern in einem Hochspannungsisolator beschrieben. Der Hochspannungsisolator besteht aus einem inneren, stangenförmigen Isolationskörper, welcher typischerweise aus faserverstärktem Kunststoff besteht. In die Oberfläche des Isolationskörpers ist eine spiralenförmige Nut eingebracht, welche von einem ersten zu einem zweiten Ende des Isolationskörper verläuft, und in welche die Faser eingelegt ist. Die Oberfläche des Isolators ist ferner mit einer Beschirmung aus einem Elastomer, typischerweise Silikon, versehen, welche den Kriechweg zwischen Hochspannungs- und Erdpotential wesentlich erhöht. Die Faser wird in das Elastomer eingepresst und ist dadurch von dem Elastomer umhüllt.

In US 6'215'940 ist ein weiterer, den Oberbegriff von Patentanspruch 1 und 11 bildenden Hochspannungsisolator mit einer optischen Faser offenbart. Der stangenförmige Isolationskörper ist hier mit einem Schrumpfschlauch umschlossen, welcher die spiralförmig um den Isolationskörper gewickelte Faser umgibt und an den Isolationskörper drückt. Die Faser ist ausserdem mit einem Silikon-Gel umgeben, um Hohlräume innerhalb des Schrumpfschlauchs zu vermeiden, so dass eine verbesserte Durchschlagsfestigkeit erreicht wird. Der Isolator kann zur weicheren Einbettung der Faser mit einer inneren Zwischenschicht aus einem Elastomer überzogen sein.

In EP 0'856'737 A1 ist ein magneto-optischer Stromsensor offenbart. Dieser Stromsensor beinhaltet einen Sensorkopf mit einer optischen Faser als Sensorspule. Diese optische Sensorfaser dient der Führung zirkularpolarisierten Lichts. Sie besteht aus einem magnetooptisch aktiven Material und darf nur eine sehr geringe lineare Doppelbrechung aufweisen. Optische Fasern weisen im allgemeinen eine Faserschutzhülle (fiber coating) auf, welcher meist aus einem Acrylat besteht. Bei Temperaturveränderungen kann sich diese Faserschutzhülle gegenüber der Faser leicht verformen und dadurch geringe Kräfte auf die Faser ausüben. Bei Fasern ohne intrinsische Doppelbrechung wie der genannten Sensorfaser kann dadurch eine unkontrollierte leichte Doppelbrechung der Faser hervorgerufen werden, wodurch die in der Sensorfaser propagierenden zirkular polarisierten Wellen und somit das Mess-Signal des Stromsensors beeinflusst wird.

In der genannten EP 0'856'737 A1 wird vorgeschlagen, die Faser von ihrer Faserschutzhülle zu befreien, um die genannten unerwünschten Beeinflussungen des Mess-Signals zu eliminieren. Um ausserdem eventuell in der nackten Faser noch vorhandene mechanische Spannungen, die ebenfalls zu einer unerwünschten Temperaturabhängigkeit des Mess-Signals führen können, zu eliminieren, und um die Faser praktisch völlig frei von Doppelbrechung zu machen, wird die Sensorfaser bei etwa 830°C getempert, nachdem sie als Spule aufgewickelt wurde. Eine nackte, von ihrer Faserschutzhülle befreite Faser ist extrem empfindlich bereits gegen kleine mechanische Kräfte und auch gegen chemische Einflüsse sowie gegen das Eindiffundieren von Wasserdampf in die Faser, welches die Faser brüchig machen kann. Diese hochempfindliche nackte Faser wird gemäss der genannten EP 0'856'737 A1 in eine Kapillare eingebracht, welche die Funktion der Faserschutzhülle übernimmt. Zum Schutz der Sensorfaser vor Feuchtigkeit und/oder chemisch aggressive Gasen wird die Kapillare gasdicht verschlossen und mit einem Schutzgas gefüllt. Für einen besseren mechanischen Schutz der Sensorfaser und um mit dem Sensor sicher hantieren zu können wird die nur wenige hundert Mikrometer Durchmesser messende Kapillare in eine Vergussmasse eingegossen. Auch während des Betriebs eines solchen Stromsensors überbrückt weder die Sensorfaser noch die Kapillare eine Potentialdifferenz.

Die oben genannten Hochspannungsisolatoren haben den Nachteil, dass die Auswahl der in ihnen einsetzbaren optischen Fasern stark eingeschränkt ist, da das Material der Faserschutzhülle mit dem sie umgebenden (Elastomer-) Material kompatibel sein muss. Denn wenn die Haftungseigenschaften zwischen Faserschutzhüllen-Material und umgebendem (Elastomer-) Material nicht gut sind, kommt es zu Ablösungen den Materialien voneinander und somit zu Hohlräumen, die zu Teilentladungen und Durchschlägen führen. Auch ist schon bei der Herstellung eines solchen Hochspannungsbauteils nicht immer eine sichere Vermeidung von grösseren Hohlräumen und somit eine ausreichend grosse Durchschlagsfestigkeit gewährleistet. Weiterhin sind polarisationserhaltende Fasern, welche durch grosse Kräfte in ihren optischen Eigenschaften verändert werden können, nicht optimal vor der Einwirkung derartiger Kräfte geschützt. Das Elastomer-Material würde für polarisationserhaltende Fasern unzulässig hohe Kräfte auf die Faser ausüben. In dem Fall ist somit eine sichere Übertragung polarisierten Lichts nicht gewährleistet.

### Darstellung der Erfindung

Es ist deshalb Aufgabe der Erfindung, ein Hochspannungsbauteil der eingangs genannten Art zu schaffen, welches die oben genannten Nachteile nicht aufweist. Weiter ist es Aufgabe der Erfindung, ein entsprechendes Herstellungsverfahren für ein solches Hochspannungsbauteil zu schaffen. Insbesondere soll das Hochspannungsbauteil für den Einsatz jedweder optischer Fasern geeignet sein, unabhängig vom Material und Typ der Faser respektive der Faserschutzhülle, und doch eine lange Standzeit haben.

Diese Aufgabe löst ein Hochspannungsbauteil mit den Merkmalen des Patentanspruches 1 und ein Herstellungsverfahren gemäss Patentanspruch 11.

Das erfindungsgemässe Hochspannungsbauteil mit einem ersten Ende und einem zweiten Ende, wobei im Betriebsfall das erste Ende gegenüber dem zweiten Ende auf einem Hochspannungspotential liegt,
- mit einem Isolierteil, welches zwischen dem ersten Ende und dem zweiten Ende angeordnet ist, und
- mit einer optischen Faser, welche in das Hochspannungsbauteil integriert ist und sich von dem ersten Ende zu dem zweiten Ende erstreckt, kennzeichnet sich dadurch,
- dass das Hochspannungsbauteil eine Kapillare aufweist, welche sich von dem ersten Ende zu dem zweiten Ende erstreckt und innerhalb des Isolierteils angeordnet ist,
- dass der Innendurchmesser der Kapillare grösser ist als der Aussendurchmesser der Faser,
- dass innerhalb der Kapillare die Faser angeordnet ist, und
- dass die Kapillare ein Schutzmedium enthält zur Erzielung einer für den Betriebsfall geeigneten Durchschlagsfestigkeit in der Kapillare.

Das erfindungsgemässe Hochspannungsbauteil weist also eine Kapillare zur Aufnahme der optischen Faser auf, wobei die Kapillare innerhalb des Isolierteils des Hochspannungsbauteils angeordnet ist und für eine hohe Durchschlagsfestigkeit mit einem Schutzmedium gefüllt ist. Das Isolierteil kann typischerweise eine Beschirmung sein, beispielsweise aus Silikon.

Dadurch wird die Faser nicht dem direkten Kontakt mit Materialien des Isolierteils ausgesetzt, so dass die Art der Faser und die Art der Faserschutzhülle unabhängig von den Materialien des Isolierteils gewählt werden kann. Trotzdem wird eine grosse Durchschlagsfestigkeit erzielt. Hohlräume und Durchschläge in Fasernähe können sehr gut vermieden werden. Die Faser ist zudem sehr gut vor grossen, durch den Isolierteil ausgeübten thermo-mechanischen Kräften geschützt. Temperaturschwankungen, beispielsweise aufgrund der Tageszeiten oder Jahreszeiten, bedingen aufgrund von unterschiedlichen thermischen Ausdehnungskoeffizienten der Materialien derartige Kräfte. Lichtverluste bei der Führung von Licht in der Faser 4 durch derartige Kräfte, auch als Microbending-Effekte bezeichnet, werden vermieden oder zumindest verringert.

In einer bevorzugten Ausführungsform des Erfindungsgegenstandes ist die Kapillare aussen von einer Kapillarenummantelung umgeben. Diese besteht vorzugsweise aus einem temperaturbeständigen Material. Dadurch ist die Kapillare mechanisch geschützt. Kräfte, welche auf die Kapillare ausgeübt werden, werden gleichmässiger über die Kapillare verteilt und geschwächt. Die Kapillarenummantelung dient dem mechanischen Schutz der Kapillare, unter anderem während des Einbaus in das Hochspannungsbauteil. Eine grössere Betriebssicherheit und Lebensdauer wird durch die Kapillarenummantelung erreicht.

In einer weiteren bevorzugten Ausführungsform des Erfindungsgegenstandes ist die Kapillare derart ausgebildet und in dem Isolierteil angeordnet, dass thermo-mechanischer Stress die Kapillare unbeschädigt lässt. Bei diesem thermo-mechanischen Stress handelt es sich vor allem um thermo-mechanischen Stress, der im Betriebsfall oder während eines Aushärtevorgangs des Isolierteils von dem Isolierteil auf die Kapillare ausgeübt wird. Durch entsprechende Wahl des Materials, der Materialstärke und der Geometrie, insbesondere der Wandstärke der Kapillare, sowie durch eine geeignete Verlegung der Kapillare in dem Isolierteil kann dies erreicht werden. Eine grosse Betriebssicherheit und Lebensdauer wird dadurch erreicht.

In einer weiteren bevorzugten Ausführungsform des Erfindungsgegenstandes ist die Faser eine polarisationserhaltende Faser. Insbesondere hat die Faser einen elliptischen Kern oder einen inneren elliptischen Mantel, oder die Faser ist eine Bowtie-Faser oder eine Panda-Faser. Derartige Fasern bewahren aufgrund ihrere starken intrinsischen Doppelbrechung in hohem Masse die Polarisation von in ihnen sich ausbreitenden linear polarisierten Lichtwellen. In verschiedenen Anwendungen ist im Polarisationszustand der Lichtwellen Information kodiert. Insbesondere in der Sensorik ist eine störungsfreie Übertragung des Polarisationszustandes für die Stabilität von Sensorsignalen wichtig. Störungen des Polarisationszustandes sind unerwünscht. Durch starke äussere mechanische Krafteinwirkung auf eine polarisationserhaltende Faser kann es zu Veränderungen der Doppelbrechung der Faser kommen, so dass sie nicht mehr so gut polarisationserhaltend ist und die genannten Störungen bei der Signalübertragung auftreten können. Mittels der Kapillare können derartige Krafteinwirkungen verhindert werden. Eine sichere Übertragung von polarisiertem Licht und eventuell entsprechend kodierten Informationen ist damit gewährleistet.

In einer weiteren bevorzugten Ausführungsform des Erfindungsgegenstandes weist die Faser eine Faserschutzhülle auf. Diese schützt die Faser vor ungewollten chemischen und mechanischen Einflüssen. Durch der Anodnung der Faser in der Kapillare kann ein Faserschutzhüllen-Material gewählt werden, ohne dass auf eine Materialkompatibilität mit Materialien des Isolierteils, vor allem bezüglich Oberflächen- und Haftungseigenschaften, Rücksicht genommen werden müsste.

In einer weiteren bevorzugten Ausführungsform des Erfindungsgegenstandes ist die Faser auswechselbar, ohne dass das Isolierteil dafür verändert werden müsste. Dies ermöglicht einen flexibleren Einsatz des Hochspannungsbauteils und eine verbesserte Reparierbarkeit.

In einer weiteren bevorzugten Ausführungsform des Erfindungsgegenstandes weist das Hochspannungsbauteil einen sich von dem ersten Ende zu dem zweiten Ende erstreckenden Isolationskörper auf, entlang dessen die Kapillare spiralförmig (wendelartig) angeordnet ist. Der Isolationskörper kann typischerweise ein stangenförmiger glasfaserverstärkter Epoxid-Körper sein, der die zwei Enden des Hochspannungsbauteils miteinander verbindet, wobei an den Enden jeweils eine Armatur angeordnet ist. Der Isolationskörper dient der mechanischen Stabilisierung des Hochspannungsbauteils. Die Kapillare ist ausserhalb oder innerhalb des Isolationskörpers derart angeordnet, dass sie dort im wesentlichen eine Spiralbahn beschreibt, die im wesentlichen entlang einer Fläche des Isolationskörpers von dem ersten Ende zu dem zweiten Ende verläuft. Dadurch kann eine verbesserte Durchschlagsfestigkeit erreicht werden. Auch wird eine längere Standzeit des Hochspannungsbauteils erreicht, da die Kapillare durch die spiralförmige Anordnung weniger starken mechanischen Belastungen ausgesetzt ist.

Die Kapillare kann in direktem Kontakt mit dem Isolationskörper sein, oder es kann auch eine Zwischenschicht zwischen dem Isolationskörper und der Kapillare vorgesehen sein, welche vorteilhaft weich ausgebildet ist, also eine geringe Shore-Härte aufweist. Dies führt ebenfalls zu einer weniger starken mechanischen Belastung der Kapillare und einer längeren Standzeit des Hochspannungsbauteils. Vorteilhaft wird der Isolationskörper mit der Zwischenschicht ummantelt, bevor die Kapillare am Isolationskörper angeordnet wird.

In einer weiteren bevorzugten Ausführungsform des Erfindungsgegenstandes weist das Hochspannungsbauteil einen Stromsensor und/oder einen Spannungssensor auf. Diese können beispielsweise elektro-optisch, magneto-optisch oder piezo-optisch arbeiten. Durch eine Sensor-Integration kann ein verbessertes, weil mit integrierten Sensorik-Funktionen ausgestattetes Hochspannungsbauteil realisiert werden. Insbesondere sind faseroptische Sensoren vorteilhaft, da die Übertragung der optischen Signale dank der optischen Faser und der Kapillare sehr einfach zu realisieren sind.

In weiteren bevorzugten Ausführungsformen des Erfindungsgegenstandes ist das Isolierteil eine Beschimung und/oder eine Isolier-Füllung und/oder ein Isolierkörper.

Das erfindungsgemässe Verfahren zur Herstellung eines Hochspannungsbauteils mit einem ersten Ende und einem zweiten Ende, wobei im Betriebsfall das erste Ende gegenüber dem zweiten Ende auf einem Hochspannungspotential liegt, und mit einem Isolierteil, welches zwischen dem ersten Ende und dem zweiten Ende angeordnet ist, kennzeichnet sich dadurch,
- dass zwischen dem ersten Ende und dem zweiten Ende innerhalb des Isolierteils eine Kapillare zur Aufnahme einer optischen Faser angeordnet wird, und
- dass in die Kapillare ein Schutzmedium eingebracht wird zur Erzielung einer für den Betriebsfall geeigneten Durchschlagsfestigkeit in der Kapillare.

Es wird also eine Kapillare in das Isolierteil eingebracht, wobei die Kapillare zur Aufnahme einer optischen Faser geeignet ist. Und in die Kapillare wird ein Schutzmedium eingebracht, das zur Erzielung einer für den Betriebsfall geeigneten Durchschlagsfestigkeit in der Kapillare geeignet ist.

Auf diese Weise kann ein betriebssicheres Hochspannungsbauteil hergestellt werden, das mit einer optischen Faser ausrüstbar ist, wobei die Faser nicht dem direkten Kontakt mit Materialien des Isolierteils des Hochspannungsbauteils ausgesetzt ist, so dass die Art der Faser und die Art der Faserschutzhülle von den Materialien des Isolierteils unabhängig gewählt werden kann.

In einer bevorzugten Ausführungsform des erfindungsgemässen Herstellungsverfahrens wird die Faser in die Kapillare eingebracht. So wird ein durchschlagsfestes und verbessertes, mit der Funktion der optischen Signalübertragung versehenes Hochspannungsbauteil herstellbar. Weil die Faser nicht dem direkten Kontakt mit Materialien des Isolierteils des Hochspannungsbauteils ausgesetzt ist, kann das Material der Faser unabhängig vom Material des Isolierteils gewählt werden.

In einer weiteren bevorzugten Ausführungsform des erfindungsgemässen Herstellungsverfahrens wird die Kapillare äusserlich mit einer Kapillarenummantelung versehen, bevor die Kapillare innerhalb des Isolierteils angeordnet wird. Dadurch wird die Kapillare mechanisch geschützt, und es wird auf einfache Weise eine radial vollständige Ummantelung der Kapillare erreicht. Kräfte, welche auf die Kapillare ausgeübt werden, werden gleichmässiger über die Kapillare verteilt und geschwächt. Eine grössere Betriebssicherheit und längere Lebensdauer wird erreicht.

In einer weiteren bevorzugten Ausführungsform des erfindungsgemässen Herstellungsverfahrens wird die Kapillare bereits vor einem Aushärtevorgang des Isolierteils innerhalb des Isolierteils angeordnet. Dadurch kann eine günstige und für viele Hochspannungsbauteile geeignete Herstellung erreicht werden, da Standard-Prozesse wie das Aushärten des Isolierteils verwendet werden können. Und die Kapillare ist in dem Isolierteil mechanisch sicher fixiert. Die Faser kann vor oder nach dem Aushärten des Isolierteils in die Kapillare eingebracht werden.

Es können durchschlagsfeste Hochspannungsbauteile mit langer Standzeit realisiert werden, die optische Fasern zur Signalübertragung aufweisen können, wobei die Fasern in der Materialwahl unabhängig von dem Material des Isolierteils wählbar sind.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Fig. 1: Hochspannungsisolator, geschnitten, schematisch;
- Fig. 2: Detail-Schnitt eines Hochspannungsbauteils im Bereich der Kapillare, geschnitten, schematisch;
- Fig. 3: Hochspannungsisolator mit elektro-optischem Spannungssensor, geschnitten, schematisch.

Die in den Zeichnungen verwendeten Bezugszeichen und deren Bedeutung sind in der Bezugszeichenliste zusammengefasst aufgelistet. Grundsätzlich sind in den Figuren gleiche oder zumindest gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

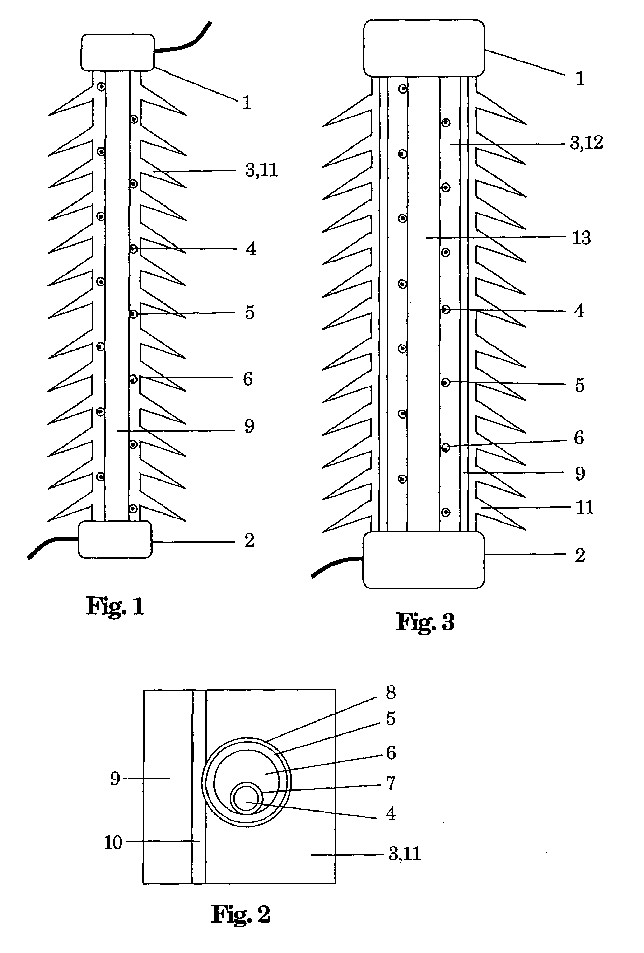

Fig. 1 zeigt schematisch und geschnitten ein erfindungsgemässes Hochspannungsbauteil. Das Hochspannungsbauteil ist ein Hochspannungsisolator mit einem ersten Ende 1 und einem zweiten Ende 2. Im Betriebsfall befindet sich das erste Ende 1 auf einem elektrischen Hochspannungspotential, während das zweite Ende 2 auf Erdpotential ist. Die beiden Enden 1,2 sind mit Armaturen versehen. Zwischen den Enden 1,2 ist ein Isolationskörper 9 angeordnet, welcher die Form eines zylindrischen Stabes aufweist. Eine solche Isolatorstange 9 dient der elektrisch isolierenden Beabstandung der beiden auf verschiedenen elektrischen Potentialen befindlichen Enden 1,2 und der mechanischen Stabilisierung der Anordnung. Sie ist vorzugsweise aus einem faserverstärktem Kunstharz, insbesondere aus einem faserverstärkten Epoxidharz.

Die Isolatorstange 9 ist umgeben von einem Isolierteil 3, welcher hier mit einer Beschirmung 11 identisch ist. Die Beschirmung 11 ist typischerweise aus Silikon. Sie dient der Verlängerung des Kriechweges, was insbesondere bei Hochspannungsbauteilen, die Witterungseinflüssen ausgesetzt sind, wünschenswert ist. In dem Isolierteil 3 befindet sich eine Kapillare 5, welche vorteilhaft um die Isolatorstange 9 in Form einer Wendel oder Spirale herumgewunden ist. Die Kapillare 5 umgibt die Isolatorstange 9 vorteilhaft spulenförmig oder spiralförmig. Sie besteht vorzugsweise aus Quarzglas. Die Kapillare ist vorteilhaft derart ausgebildet und in dem Isolierteil angeordnet, dass thermo-mechanischer Stress, der im Betriebsfall von dem Isolierteil auf sie ausgeübt wird, sie unbeschädigt lässt. Dies kann erreicht werden durch eine entsprechende Materialwahl, und indem die Geometrie der Kapillare, insbesondere ihre Wandstärke, entsprechend gewählt wird. Vorzugsweise weist die Kapillare 5 einen runden Querschnitt auf.

Innerhalb der Kapillare 5 ist eine optische Faser 4 angeordnet. Die Faser 4 dient der optischen Informationsübermittlung über ein Hochspannungspotential hinweg. An den Armaturen an den Enden 1,2 sind weiterführende Kabel angedeutet. Ausser der Faser 4 enthält die Kapillare 5 auch noch ein Schutzmedium 6. Das Schutzmedium 6 dient der Erhöhung der Durchschlagsfestigkeit des Hochspannungsbauteils. Es kann dafür beispielsweise trockener Stickstoff oder ein Transformator-Öl oder auch ein dielektrisches Gel wie Silikon-Gel verwendet werden. Damit das Schutzmedium 6 nicht aus der Kapillare 5 entweichen kann, ist die Kapillare 5 an ihren Enden verschlossen (nicht dargestellt). Durch ein Versiegeln der Enden der Kapillare 5 wird auch das Eindringen von Feuchtigkeit in die Kapillare 5 vermieden, was vorteilhaft ist, da eindringende Feuchtigkeit einerseits die Durchschlagsfestigkeit verringern könnte und andererseits die Kapillare von innen angreifen könnte. Eine unverschlossene Kapillare 5 ist aber auch denkbar, insbesondere wenn die Faser 4 eine Faserschutzhülle aufweist, und wenn keine hohe Luftfeuchtigkeit in die Kapillare 5 eindringen kann.

Zur Herstellung des in Fig. 1 dargestellten Hochspannungsisolators wird gegebenenfalls zunächst der Isolationskörper 9 an den Enden 1,2 mit Befestigungsmöglichkeiten für die Armaturen versehen. Dann wird die optische Faser 4 in die Kapillare 5 eingeführt. Danach wird die Kapillare 5 um den Isolationskörper 9 gewickelt, so dass sie sich von dem ersten Ende 1 bis zu dem zweiten Ende 2 erstreckt. Gegebenenfalls wird die Kapillare auch noch auf dem Isolationskörper 9 fixiert. Dann wird vorteilhaft das Schutzmedium 6 in die Kapillare eingebracht und die Kapillare gasdicht verschlossen. Danach wird die Isolatorstange 9 mitsamt der die Faser 4 beinhaltenden Kapillare 5 in eine vorzugsweise evakuierte Vergussform (nicht dargestellt) gelegt, welche dann unter Vermeidung von Lufteinschlüssen mit flüssigem Silikon für die Beschirmung 11 gefüllt wird. Das Silikon muss danach ausgehärtet werden, was typischerweise durch etwa 30-minütiges Aufheizen auf etwa 150°C geschieht. Bei einem solchen Aufheizvorgang und vor allem bei dem anschliessenden Abkühlvorgang entsteht grosser thermo-mechanischer Stress in dem Hochspannungsbauteil. Das Einfüllen des Schutzmediums 6 kann gegebenenfalls auch erst nach dem Eingiessen des Isolationskörpers 9 und der Kapillare 5 mit dem Beschirmungsmaterial vorgenommen werden.

Die Länge eines Hochspannungsbauteils hängt von der Spannung ab, für die das Hochspannungsbauteils ausgelegt ist. Sollen beispielsweise Spannungen von 145 kV von dem ersten Ende 1 eines Hochspannungsbauteils zu dem zweiten Ende 2 abfallen, so wird eine Länge zwischen den beiden Enden 1,2 von etwa 1.4 m gewählt.

Fig. 2 zeigt schematisch und geschnitten einen Detail-Ausschnitt aus einem Hochspannungsbauteil, das dem in Fig. 1 dargestelltem Aufbau ähnlich ist.

Zwischen dem Isolationskörper 9 und dem als Beschirmung 11 dienenden Isolierteil 3 ist eine Zwischenschicht 10 aus einem weichen Kunststoff, beispielsweise Silikon, angeordnet. Die Zwischenschicht 10 dient der Verringerung von auf die Kapillare 5 wirkendem thermo-mechanischem Stress. Ebenfalls dem mechanischen Schutz der Kapillare 5 dient eine Kapillarenummantelung 8. Diese ummantelt die Kapillare 5 der Länge nach. Sie besteht aus einem Dielektrikum, vorzugsweise einem Polyimid. Sie weist typischerweise eine Wandstärke zwischen 5 µm und 50 µm auf. Die Kapillarenummantelung 8 dient ausserdem noch einem verbesserten Haftungsvermögen zwischen der Kapillare 5 (genauer: der Kapillarenummantelung 8) und dem sie umgebenden Material, also dem Material, aus dem das Isolierteil 3 besteht. Auch kann die Kapillarenummantelung vorteilhaft derart gewählt werden, dass sie bei einem Eingiessen in das Isolierteil-Material gute Benetzungseigenschaften aufweist, so dass hohlraumfreie Kontaktflächen entstehen. Mittels einer geeignet gewählten Kombination des Materials der Kapillarenummantelung 8 und des Materials des Isolierteils 3 kann eine sichere Verbindung zwischen der Kapillare 5 und dem sie umgebenden Isolierteil 3 geschaffen werden, die frei von Hohlräumen ist und eine grosse Lebensdauer bei grosser Durchschlagsfestigkeit aufweist. Der Einschluss von Hohlräumen muss bei der Herstellung vermieden werden, und man muss vermeiden, dass sich Verbindungen innerhalb des Hochspannungsbauteils im Laufe der Zeit lösen und sich Hohlräume bilden, die zu Teilentladungen führen können.

Gegenüber Hochspannungsbauteilen mit integrierten Fasern, wie sie aus dem Stand der Technik bekannt sind, hat der Aufbau mit einer Kapillare 5 den grossen Vorteil, dass die Faser 4, respektive eine die Faser 4 umgebende Faserschutzhülle 7, bezüglich des Materials frei gewählt werden kann. Die Faser 4 oder der Fasertyp der Faser 4 kann also unabhängig von Materialien des Hochspannungsbauteils gewählt werden. Das Material der Kapillare 5 oder das Material der Kapillarenummantelung 8 kann auf guten mechanischen Schutz der Kapillare 5 und/oder auf gute Haftungseigenschaften mit dem umgebenden Material (Isolierteil 3) optimiert werden. Gegebenenfalls kann für eine weitere Verbesserung der Haftungseigenschaften in Haftvermittler (Primer) eingesetzt werden. Ein solcher kann vor der Einbettung der Kapillare 5 in das Isolierteil 3 auf die Zwischenschicht 8 aufgetragen werden.

Vorteilhaft ist das Hochspannungsbauteil derart ausgebildet, dass die Faser 4 auswechselbar ist. Die Faser 4 soll insbesondere auswechselbar sein, ohne dass das Isolierteil 3 verändert werden muss. Dies kann mittels der Kapillare 5 dadurch erreicht werden, dass das Schutzmedium 6 ausreichend niederviskos ist oder aus der Kapillare 5 ganz oder zumindest teilweise entfernbar ist, so dass eine ausreichend kleine Gleitreibung zwischen Kapillare 5 und Faser 4 wirkt und ein Herausziehen der kompletten Faser 4 aus der Kapillare 5 möglich ist. Eventuelle Verschlüsse oder Versiegelungen an den Enden der Kapillare müssen entfernbar sein. Und eine neue Faser 4 muss in die Kapillare 5, welche sich in dem Isolierteil 3 befindet, einführbar sein. Zur Erzeugung einer für das Herausziehen und/oder Einführen ausreichend kleinen Gleitreibung kann ein geeignetes Schutzmedium 6 oder auch eine gleitreibungsvermindernde Flüssigkeit, wie beispielsweise ein Öl oder Alkohol verwendet werden. Auch ein nicht zu kleiner Steigungswinkel der Kapillarenwendel dient einem vereinfachten Faserwechsel. Insbesondere kann das Einführen einer neuen Faser 4 in die Kapillare 5 dadurch vereinfacht werden, dass vor dem Entfernen der ursprünglichen Faser 4 die neue Faser 4 an einem Ende der ursprünglichen Faser 4 befestigt wird, beispielsweise durch Anspleissen, so dass mit einem Herausziehen der ursprünglichen Faser 4 die neue Faser 4 gleichzeitig in die Kapillare 5 hineingezogen wird.

Optische Fasern 4 weisen im allgemeinen eine Faserschutzhülle 7 (fiber coating) auf. Dieser besteht typischerweise aus einem Acrylat. Manche Fasern 4 weisen Faserschutzhüllen 7 aus einem hochtemperaturbeständigem Material wie Polyimid oder Teflon auf. In Versuchen hat sich gezeigt, dass im Falle einer Anordnung mit einer Kapillare 5 trotz Ausheiztemperaturen von etwa 150°C für die Silikon-Beschirmung 11,3 die gebräuchlicheren acrylatummantelten Fasern 4 einsetzbar sind. Spezielle Fasern sind oft nur mit einem Acrylat-Mantel 7, aber nicht mit einer speziellen hochtemperaturbeständigen Faserschutzhülle 7 erhältlich. Vorzugsweise und vorteilhaft werden darum acrylat-ummantelte Fasern 4 eingesetzt.

Fig. 3 zeigt eine weitere bevorzugte Ausführungsform des Erfindungsgegenstandes schematisch und geschnitten. Das Hochspannungsbauteil ist ein Hochspannungsisolator mit einer Beschirmung 11 und einem integrierten elektro-optischen oder piezo-optischen Spannungssensor 13. Zwischen den beiden mit je einer Armatur versehenen Enden 1,2 ist ein Isolationskörper 9 angeordnet. Dieser besteht aus einem Dielektrikum, vorzugsweise aus einem faserverstärkten Kunststoff. Der Isolationskörper 9 hat im wesentlichen die Form eines Hohlzylinders. Aussen auf dem Isolationskörper 9 und diesen umgebend ist die optionale Beschirmung 11 angeordnet. Zentral bezüglich der Längsachse des Hochspannungsisolators ist der elektro-optische oder piezo-optische Spannungssensor 13 angeordnet. Spiralförmig um den Spannungssensor 13 herum angeordnet ist die Kapillare 5 mit dem Schutzmedium 6 und der Faser 4 sowie gegebenenfalls mit einer Kapillarenummantelung 8, welche in Fig. 3 nicht dargestellt ist. Der Spannungssensor 13 kann vorteilhaft eine Zwischenschicht 10 aufweisen, wie sie in Fig. 2 dargestellt ist. Eine Detektionseinheit (nicht dargestellt) des Spannungssensors 13 kann vorteilhaft in einer Armatur des Hochspannungsbauteils angeordnet sein, insbesondere in einer auf Erdpotential angeordneten Armatur. Zur Herstellung des Hochspannungsbauteils wird vorteilhaft die die Faser 4 bereits enthaltende Kapillare 5 um den Spannungssensor 13 gewickelt.

Zwischen dem Isolationskörper 9 und dem Spannungssensor 13 ist eine Isolations-Füllung 12 angeordnet. Die Isolations-Füllung 12 dient hier als Isolierteil 3; in sie eingebettet ist die Kapillare 5. Die Isolations-Füllung 12 ist vorteilhaft eine Feststoff-Isolation, beispielsweise aus Polyurethan. Sie kann aber auch aus einem anderen Dielektrikum sein, wie beispielsweise einer isolierenden Flüssigkeit, zum Beispiel Silikon-Öl oder Transformator-Öl, oder einem isolierenden Gas, wie SF₆, das vorzugsweise mit Druck beaufschlagt ist. Vorzugsweise wird der Spannungssensor 13 erst dann mit der Isolations-Füllung 12 umgeben, wenn die Kapillare bereits um den Spannungssensor 13 herum angeordnet ist.

Der Spannungssensor 13 kann vorteilhaft in einer Art ausgebildet sein, wie sie in der Offenlegungsschrift EP 0'682'261 A2 oder in der Offenlegungsschrift EP 0'907'084 A2 offenbart ist. Der Offenbarungsgehalt dieser Schriften ist darum hiermit ausdrücklich in die Beschreibung übernommen. Vorteilhaft kann die Faser 4 der Übertragung von Licht zum Sensor dienen. Im Falle eines Spannungssensors gemäss der genannten EP 0'907'084 A2 kann vorteilhaft die Lichtübertragung zwischen den Quarzen des Sensors mittels Fasern 4 in Kapillaren 5 stattfinden. Zusätzlich oder alternativ zum Spannungssensor 13 kann das Hochspannungsbauteil (beispielsweise das in Fig. 3 gezeigte, aber auch das in Fig. 1 gezeigte) noch einen optischen Stromsensor aufweisen (nicht dargestellt). Ein Stromsensor oder zumindest dessen Sensorkopf kann vorteilhaft am ersten Ende 1 oder auch am zweiten Ende 2 des Hochspannungsbauteils, aber auch dazwischen angeordnet sein. Die Übertragung von Licht des Sensors erfolgt vorteilhaft mittels der Faser 4 in der Kapillare 5. In K. Bohnert et al., Temperature and vibration insensitive fiber-optic current sensor, J. Lightwave Technology, 20(2), 267-276, (2002) sind verschiedene geeignete optische Stromsensoren offenbart. Das Dokument wird darum mit seinem gesamten Offenbarungsgehalt in die Beschreibung übernommen.

Wenn ein Hochspannungsbauteil, das dem in Fig. 3 dargestellten ähnlich ist, keinen Spannungssensor enthalten soll, dann kann trotzdem die Kapillare 5 innerhalb eines Isolierteils 3 innerhalb des Isolierkörpers 9 angeordnet sein. Beispielsweise kann die Kapillare 5 mittels einer mechanischen Hilfsstruktur (nicht dargestellt) in eine ungefähr spulenartige Form gebracht werden und in ein Isolierteil 3, respektive eine Isolierfüllung 12 eingebracht werden.

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Das Hochspannungsbauteil kann, wie in den Fig. 1 und 3 dargestellt, ein Hochspannungsisolator sein. Das Hochspannungsbauteil kann aber auch beispielsweise eine Hochspannungs-Durchführung, ein Hochspannungs-Ableiter oder ein Hochspannungs-Schalter sein. Das Hochspannungsbauteil kann vorteilhaft einen Stromsensor und/oder einem Spannungssensor 13 aufweisen. Beispielsweise in der Offenlegungsschrift DE 100'05'164 A1, das hierdurch mit seinem gesamten Offenbarungsgehalt in die Beschreibung übernommen wird, sind verschiedene Hochspannungs-Durchführungen, Strom- und/oder Spannungssensoren und mehrere vorteilhafte Anordnungen von Strom- und/oder Spannungssensoren in Hochspannungsdurchführungen offenbart. In derartigen Hochspannungs-Durchführungen kann vorteilhaft eine optische Faser 4 und Kapillare 5 in der erfindungsgemässen Weise integriert werden. Das Hochspannungsbauteil muss nicht notwendigerweise eine optische Faser enthalten, sondern kann auch lediglich zur Aufnahme eine optischen Faser 4 in der Kapillare 5 geeignet sein. Die im Bereich der Hochspannungstechnik nominal auftretenden Spannungen liegen typischerweise zwischen 50 kV und 1000 kV, insbesondere bei etwa 75 kV, 125 kV, 1 75 kV, 240 kV, 550 kV und 800 kV.

Im Betriebsfall wird in den meisten Fällen das eine Ende 2,1 auf Erdpotential und das andere Ende 1,2 auf einem Hochspannungspotential liegen. Es sind aber auch Hochspannungsbauteile und Anordnungen denkbar, bei denen beide Enden 1,2 auf je einem Hochspannungspotential liegen, wobei dennoch zwischen den beiden Enden 1,2 ein Hochspannungspotential anliegt. Der Betriebsfall umfasst nicht nur die nominalen, im allgemeinen dauerhaft an dem Hochspannungsbauteil anliegenden Spannungen, sondern auch die im Falle von Störungen wie Kurzschlüssen auftretenden Spannungsspitzen, für die ein Hochspannungsbauteil ausgelegt ist.

An mindestens einem Ende 1,2 weist das Hochspannungsbauteil vorteilhaft mindestens eine Armatur auf. Diese kann der Aufnahme von Enden der Kapillare 5 und gegebenenfalls auch der Aufnahme von Enden der Faser 4 dienen, und innerhalb und/oder ausserhalb an der mindestens einen Armatur können auch Anschlüsse für weitere elektrische oder Faser-Verbindungen vorgesehen sein. Derartige Anschlüsse können Stecker- oder Spleiss-Verbindungen sein. An mindestens einem Ende 1,2 ist vorteilhaft mindestens ein Anschluss für eine Hochspannung und/oder für mindestens eine Glasfaser vorgesehen, welcher vorteilhaft in eine Armatur integtriert ist.

Die Enden 1,2 können mit den geometrischen Enden des Hochspannungsbauteils übereinstimmen, müssen dies aber nicht. Zwischen den Enden 1,2, welche dadurch gegeben sind, dass zwischen ihnen ein Hochspannungspotential anliegt und dass sich die Faser (mindestens) zwischen ihnen erstreckt, muss nicht die maximale am Hochspannungsbauteil anliegende Spannung anliegen; es kann auch eine Teilspannung sein.

Das Isolierteil 3 kann irgendein sich zwischen den beiden Enden erstreckendes Dielektrikum sein, in welchem die Kapillare 5 integriert ist. Beispielsweise kann er ein stangenförmiger (Fig. 1) oder rohrförmiger (Fig. 3) dielektrischer Körper sein. Oder auch eine Flüssigkeit oder ein Gas. Er kann beispielsweise ein Isolatorkörper 9, eine Beschirmung 11 (Fig. 1) oder eine Isolationsfüllung 12 (Fig. 3) sein.

Die optische Faser 4 dient der Übertragung von Signalen. Dies kann im Bereich der Kommunikation und Tekemommunikation sein, aber auch im Bereich Sicherheitstechnik oder Leittechnik und insbesondere im Bereich der Sensorik. Speziell vorteilhaft ist die Übertragung von Licht, insbesondere von polarisiertem Licht, von Strom-, Spannungs- und/oder TemperaturSensoren. Die Faser 4 weist vorteilhaft eine Faserschutzhülle 7 auf; es ist aber auch denkbar, Fasern 4 ohne Faserschutzhülle 7 einzusetzen. Vorzugsweise werden polarisationserhaltende Fasern 4, insbesondere Fasern 4, die aufgrund ihrer Geometrie polarisationserhaltend sind, eingesetzt. In J. Noda et al., Polarisation maintaining fibers and their applications, J. Lightwave Technology, 4(8), 1071-1089 (1986) sind verschiedene polarisationserhaltende Fasern offenbart, die in einem erfindungsgemässen Hochspannungsbauteil einsetzbar sind. Darum wird die genannte Veröffentlichung hiermit ausdrücklich in den Offenbarungsgehalt dieser Patentanmeldung aufgenommen. Bevorzugt werden insbesondere Fasern mit elliptischem Kern, Fasern mit einem inneren elliptischen Mantel, Bowtie-Fasern oder Panda-Fasern eingesetzt.

Die Faser 4 ist solcherart in dem Hochspannungsbauteil angeordnet, dass im Betriebsfall ein Teil der Faser 4 gegenüber einem anderen Teil der Faser 4 auf einem Hochspannungspotential liegt. Vorteilhaft beschreibt die Faser 4 und die Kapillare 5 einen im wesentlichen wendelförmigen Weg von dem ersten Ende 1 zu dem zweiten Ende 2. Eine derartige Anordnung verringert die Einwirkung thermo-mechanischer Kräfte auf die Kapillare 5. Ausserdem wird, insbesondere bei kleinen Ganghöhen und somit kleinen Anstiegswinkeln der von der Kapillare 5 beschriebenen Wendel, möglichst kleiner als 90° oder kleiner als 60°, der von dem Schutzmedium 6 aufzufüllende Abstand zwischen dem Äusseren der Faser 4 und dem Inneren der Kapillare 5 in Richtung parallel zu den elektrischen Feldlinien klein. Dadurch wird eine hohe Grenzfeldstärke erreicht, oberhalb welcher Teilentladungen innerhalb der Kapillare 5 auftreten könnten. Die Faser 4 kann sich auch über eines oder beide der Enden 1,2 hinaus erstrecken. Statt einer einzigen Faser 4 können auch mehrere Fasern 4 in einer Kapillare 5 angeordnet sein; vorteilhaft als Redundanz, und/oder auch zur Übertragung mehrerer verschiedener Signale, beispielsweise je ein Sensorsignal von drei Wechselstromphasen. Der Durchmesser einer Faser 4 liegt typischerweise im Bereich von 50 µm bis 200 µm, meistens zwischen 75 µm und 140 µm.

Die Kapillare 5 kann vorteilhaft aus Quarzglas oder auch einem anderen Glas sein. Vorteilhaft weist die Kapillare im wesentlichen den gleichen thermischen Ausdehnungskoeffizienten auf wie die Faser 4. Es sind aber auch Kapillaren 5 aus einem Kunststoff, beispielsweise Polyimid, Teflon oder Polyethylen denkbar. Bevorzugt weist die Kapillare 5 eine oben beschriebene Kapillarenummantelung 8 auf. Vorteilhaft ist die Kapillare 5 auf der äusseren Oberfläche des Isolationskörpers 9 oder in diesem drin angeordnet, insbesondere an einer innerer Oberfläche des Isolierkörpers 9. Es kann vorteilhaft eine Zwischenschicht 10 zwischen Kapillare 5 und Isolationskörper 9 angeordnet sein. Es können auch, aus Redundanzgründen oder für die Übertragung grösserer Datenvolumina, mehrere Kapillare in einem Hochspannungsbauteil integriert sein. Typische Kapillaren-Innen- und Aussendurchmesser (ohne eine Kapillarenummantelung 8) betragen einige 100 µm, beispielsweise 200 µm bis 600 µm. Dabei beträgt die Wandstärke typischerweise 20 µm bis 80 µm. Vorteilhaft kann die Kapillare an ihren Enden (gasdicht) verschlossen sein. Vorteilhaft kann das Hochspannungsbauteil mehrere Kapillaren 5 aufweisen. Dies kann beispielsweise aus Redundanzgründen, und/oder auch zur Übertragung verschiedener Signale der Fall sein. Insbesondere können zur Übertragung von Sensorsignalen vorteilhaft drei oder sechs Kapillaren 5 vorgesehen sein, wobei ein Satz von drei Kapillaren 5 dann der Aufnahme von je einer oder mehrerer Fasern 4 zur Übertragung von Sensorsignalen von verschiedenen Wechselstromphasen dient.

Das Schutzmedium 6 ist ein gasförmiges oder flüssiges Dielektrikum. Vorteilhaft hat das Schutzmedium 6 einen kleinenthermischen Ausdehnungskoeffizienten. Bevorzugt ist es trockener Stickstoff oder auch Silikon-Öl oder SF₆. Das Schutzmedium 6 kann vor oder vorzugsweise nach der Faser 4 in die Kapillare eingebracht werden. In besonderen Fällen kann auch Luft oder Vakuum als mögliches Schutzmedium 6 dienen. Bei nicht ungewöhnlich hoher Luftfeuchtigkeit kann die Umgebungsluft als Schutzmedium 6 dienen, und die Kapillare 5 kann unverschlossen sein. Das Schutzmedium dient zur Vermeidung von Teilentladungen innerhalb der Kapillare.

Die Kapillarenummantelung 8 kann mehrschichtig ausgebildet sein. Die Kapillare 5 kann vor oder nach dem Anordnen der Kapillare 5 in dem Isolierteil 3 mit der Kapillarenummantelung 8 versehen werden. Die Wandstärke oder Dicke einer Kapillarenummantelung 8 beträgt typischerweise einige 10 µm, beispielsweise zwischen 20 µm und 80 µm. Der Isolationskörper 9 kann stabförmig, rohrförmig, prismenförmig, aber kann auch gekrümmt sein. Es ist möglich, dass der Isolationskörper 9 gleichzeitig der Isolierteil 3 ist. Vorteilhaft kann der Isolationskörper 9 kann mit einer Nut versehen sein, in welcher die Kapillare 5 verlegt ist. Details zu einer derartigen Anordnung können der genannten Schrift US 5'594'827 entnommen werden, deren Offenbarungsgshalt hiermit ausdrücklich in die Beschreibung übernommen ist.

Die genannten Merkmale können gemeinsam oder auch einzeln oder in beliebiger Kombination vorteilhaft sein.

### Bezugszeichenliste

- 1: erstes Ende
- 2: zweites Ende
- 3: Isolierteil
- 4: optische Faser
- 5: Kapillare
- 6: Schutzmedium
- 7: Faserschutzhülle
- 8: Kapillarenummantelung
- 9: Isolationskörper, Isolatorstange
- 10: Zwischenschicht
- 11: Beschirmung
- 12: Isolations-Füllung
- 13: Spannungssensor

## Patentansprüche

1. Hochspannungsbauteil mit einem ersten Ende (1) und einem zweiten Ende (2), wobei im Betriebsfall das erste Ende (1) gegenüber dem zweiten Ende (2) auf einem Hochspannungspotential liegt,
mit einem Isolierteil (3; 9,11,12), welches zwischen dem ersten Ende (1) und dem zweiten Ende (2) angeordnet ist, und
mit mindestens einer optischen Faser (4), welche in das Hochspannungsbauteil integriert ist und sich von dem ersten Ende (1) zu dem zweiten Ende (2) erstreckt,
**dadurch gekennzeichnet,**
**dass** das Hochspannungsbauteil mindestens eine Kapillare (5) aufweist, welche sich von dem ersten Ende (1) zu dem zweiten Ende (2) erstreckt und innerhalb des Isolierteils (3; 9,11,12) angeordnet ist,
**dass** der Innendurchmesser der Kapillare (5) grösser ist als der Aussendurchmesser der Faser (4),
**dass** innerhalb der Kapillare (5) die Faser (4) angeordnet ist, und
**dass** die Kapillare (5) ein Schutzmedium (6) enthält zur Erzielung einer für den Betriebsfall geeigneten Durchschlagsfestigkeit in der Kapillare (5).

2. Hochspannungsbauteil gemäss Anspruch 1, **dadurch gekennzeichnet, dass** die Kapillare (5) zum Schutz der Kapillare (5) vor mechanischem Stress aussen von einer Kapillarenummantelung (8) umgeben ist.

3. Hochspannungsbauteil gemäss einem der vorhergehenden Ansprüche,
**dadurch gekennzeichnet, dass** die Kapillare (5) derart ausgebildet und in dem Isolierteil (3; 9,11,12) angeordnet ist, dass thermo-mechanischer Stress, der im Betriebsfall von dem Isolierteil (3; 9,11,12) auf sie ausgeübt wird, sie unbeschädigt lässt, und/oder
dass die Kapillare (5) derart ausgebildet und in dem Isolierteil (3; 9,11,12) angeordnet ist, dass thermo-mechanischer Stress, der während eines Aushärtevorgangs des Isolierteils (3; 9,11,12) von dem Isolierteil (3; 9,11,12) auf sie ausgeübt wird, sie unbeschädigt lässt.

4. Hochspannungsbauteil gemäss Anspruch 1, **dadurch gekennzeichnet, dass** die Faser (4) eine polarisationserhaltende Faser (4), insbesondere eine Faser mit elliptischem Kern, eine Faser mit einem inneren elliptischen Mantel, eine Bowtie-Faser oder eine Panda-Faser, ist.

5. Hochspannungsbauteil gemäss einem der vorhergehenden Ansprüche,
**dadurch gekennzeichnet, dass** die Faser (4) eine Faserschutzhülle (7) aufweist.

6. Hochspannungsbauteil gemäss einem der vorhergehenden Ansprüche,
**dadurch gekennzeichnet, dass** die Faser (4) auswechselbar ist, ohne dass das Isolierteil (3; 9,11,12) dafür verändert werden müsste.

7. Hochspannungsbauteil gemäss einem der vorhergehenden Ansprüche, wobei das Hochspannungsbauteil einen sich von dem ersten Ende (1) zu dem zweiten Ende (2) erstreckenden Isolationskörper (9) aufweist, **dadurch gekennzeichnet, dass** der Isolationskörper (9) von dem Isolierteil (3; 11,12) verschieden ist, dass die Kapillare (5) spiralförmig entlang des Isolationskörpers (9) angeordnet ist, und insbesondere dass der Isolationskörper (9) von einer Zwischenschicht (10) ummantelt ist und die Zwischenschicht (10) zwischen dem Isolationskörper (9) und der Kapillare (5) angeordnet ist.

8. Hochspannungsbauteil gemäss einem der vorhergehenden Ansprüche,
**dadurch gekennzeichnet, dass** das Hochspannungsbauteil einen Stromsensor und/oder einen Spannungssensor (13) aufweist.

9. Hochspannungsbauteil gemäss einem der vorhergehenden Ansprüche,
**dadurch gekennzeichnet, dass** das Isolierteil (3; 9,11,12) eine Beschirmung (11) und/oder eine Isolations-Füllung (12) und/oder ein Isolationskörper (9) ist.

10. Hochspannungsbauteil gemäss einem der vorhergehenden Ansprüche,
**dadurch gekennzeichnet, dass** das Hochspannungsbauteil ein Hochspannungs-Isolator, eine Hochspannungs-Durchführung, ein Hochspannungs-Ableiter oder ein Hochspannungs-Schalter ist.

11. Verfahren zur Herstellung eines Hochspannungsbauteils mit einem ersten Ende (1) und einem zweiten Ende (2), wobei im Betriebsfall das erste Ende (1) gegenüber dem zweiten Ende (2) auf einem Hochspannungspotential liegt, und mit einem Isolierteil (3; 9,11,12), welches zwischen dem ersten Ende (1) und dem zweiten Ende (2) angeordnet ist,
**dadurch gekennzeichnet,**
**dass** zwischen dem ersten Ende (1) und dem zweiten Ende (2) innerhalb des Isolierteils (3; 9,11,12) mindestens eine Kapillare (5) zur Aufnahme mindestens einer optischen Faser (4) angeordnet wird, und
**dass** in die Kapillare ein Schutzmedium (6) eingebracht wird zur Erzielung einer für den Betriebsfall geeigneten Durchschlagsfestigkeit in der Kapillare (5).

12. Herstellungsverfahren gemäss Anspruch 11, **dadurch gekennzeichnet, dass** die mindestens eine Faser (4) in die Kapillare (5) eingebracht wird.

13. Herstellungsverfahren gemäss einem der Ansprüche 11 oder 12, **dadurch gekennzeichnet, dass** die Kapillare (5) äusserlich mit einer Kapillarenummantelung (8) versehen wird, bevor die Kapillare (5) innerhalb des Isolierteils (3; 9,11,12) angeordnet wird.

14. Herstellungsverfahren gemäss einem der Ansprüche 11 bis 13, wobei das Hochspannungsbauteil einen sich von dem ersten Ende (1) zu dem zweiten Ende (2) erstreckenden Isolationskörper (9) aufweist, **dadurch gekennzeichnet, dass** der Isolationskörper (9) von dem Isolierteil (3; 11,12) verschieden ist, dass die Kapillare (5) spiralförmig entlang des Isolationskörpers (9) angeordnet wird, und insbesondere dass der Isolationskörper (9) mit einer Zwischenschicht (10) ummantelt wird und dann die Kapillare (5) spiralförmig derart entlang des mit der Zwischenschicht (10) ummantelten Isolationskörpers (9) angeordnet wird, dass die Zwischenschicht (10) zwischen der Kapillare (5) und dem Isolationskörper (9) angeordnet ist.

15. Herstellungsverfahren gemäss einem der Ansprüche 11 bis 14, **dadurch gekennzeichnet, dass** die Kapillare (5) vor einem Aushärtevorgang des Isolierteils (3; 9,11,12) innerhalb des Isolierteils (3; 9,11,12) angeordnet wird.

16. Herstellungsverfahren gemäss einem der Ansprüche 11 bis 15, **dadurch gekennzeichnet, dass** die Faser (4) in die Kapillare (5) eingebracht wird, bevor die Kapillare (5) innerhalb des Isolierteils (3; 9,11,12) angeordnet wird.

17. Herstellungsverfahren gemäss einem der Ansprüche 11 bis 15, **dadurch gekennzeichnet, dass** die Faser (4) in die Kapillare (5) eingebracht wird, nachdem die Kapillare (5) innerhalb des Isolierteils (3; 9,11,12) angeordnet wird, und/oder dass die Faser (4) derart in die Kapillare (5) eingebracht wird, dass sie auswechselbar ist.
